# EUROPEAN PATENT SPECIFICATION

(11) **EP 4 497 672 B1**
(45) Date of publication and mention of the grant of the patent: **25.11.2026**
(21) Application number: 24190962.1
(22) Date of filing: 25.07.2024
(51) Int. Cl.: B62M 6/55, B62M 11/14, B62M 11/18

(54) **DIFFERENTIAL TRANSMISSION METHOD AND POWERTRAIN FOR ELECTRICALLY-ASSISTED BICYCLE**
DIFFERENTIALGETRIEBEVERFAHREN UND ANTRIEBSSTRANG FÜR EIN ELEKTRISCH UNTERSTÜTZTES FAHRRAD
PROCÉDÉ DE TRANSMISSION DIFFÉRENTIELLE ET GROUPE MOTOPROPULSEUR POUR BICYCLETTE À ASSISTANCE ÉLECTRIQUE

(30) Priority: 28.07.2023 BE 202305621
(43) Date of publication of application: 29.01.2025
(73) Proprietor: E2 Drives, 1300 Wavre (BE)
(72) Inventor: DELEVAL, Christophe Stephan G, 1300 wavre (BE); DELEVAL, Arthur Christophe D, 1300 Wavre (BE); VERLÉ, Aubain Benoit D, 1300 Wavre (BE)
(74) Representative: Kirkpatrick

(56) References cited:
- DE-A1- 102017 219 608
- US-A1- 2020 115 003

## Description

### Field of the invention

The present invention refers to a new type of assistance powertrain for bicycles.

### Description of the state of the art

The development of electric mobility has prompted the multiplication of electric assistance systems for bicycles. Most systems operate on the principle of simple torque assistance provided by a motor at the crankset level. A motor provides power. The speed is transmitted to the rear wheel via a chain or a belt. Gear ratios are managed by the rider via a system of sprockets (derailleur gears) on the rear wheel or a gearbox integrated into the rear hub of this wheel.

Differential systems in which an epicycloidal gear train assures both torque assistance and gear ratio management in a same box have been described. Improvements have equally been described, first of all to enable the bicycle to be used even when the batteries are flat, and secondly to adapt the speed and/or torque assistance to the force applied by the rider, chiefly in order to facilitate the management of reliefs and to prevent the transmission from slipping.

Such systems are for example described in WO2016/034574, WO2019158503A1, WO2019043123 and WO2021032548. In these systems, an epicycloidal gear train comprising a ring gear, a sun gear and a planet carrier, potentially double planet carriers, is utilized, in combination with reduction stages to obtain the necessary reduction ratios. However, these systems lack compactness and the multiplicity of parts results in lower yields, greater clearances, higher noise levels and higher costs. The main challenges of electric assistance are therefore to obtain a system that is simultaneously very compact, lightweight, robust over time.

Different approaches have been taken to address these challenges. DE202017007569U1 and DE102017219608A1 , which discloses the preamble of claims 1 and 8, described for example a system comprising two motors, each associated to a harmonic drive having a distinct axis, one defining the speed of assistance, the other associated to the outlet adjusting the cadence. The two harmonic drives have non-overlapping parallel axes and cooperate via an intermediary gearing or direct engagement of the outer faces of the harmonic drives. The consequence thereof is a major obstacle, making it complicated to get this system up and running. In particular, the volume of the flexible wheel tulips of the harmonic system, associated with the fatigue and to the losses that they generate, has discouraged a person skilled in the art from utilizing them in electric-assist powertrains. The filing applicant has thus found it necessary to address the shortcomings and weaknesses of the existing systems.

### Summary of the invention

The object of the invention is a method of assisted differential transmission for electric bicycle comprising the following stages:
- an angular speed ω1 is applied by action of a first motor to a first inlet of a differential system;
- an angular speed ω2 is applied by an inlet body transmitting at least the action of a rider on a crankset to a second inlet of the differential system;
- The angular speeds ω1 and ω2 are combined in the differential system comprising a ring gear having an inner surface and an element cooperating with this inner surface, the periphery of said element containing, at all times, the geometric center of the ring gear, and transmitted to an outlet body with an angular speed ω3;

a second motor for regulating the assistance to the rider being connected either to the second inlet in combination with the action of the rider through the inlet body, or to the outlet,
the axis of the outlet body, the main axis of the differential system, the axis of the first motor and the axis of the second motor being coincident and/or concentric with the axis of the inlet body.

The angular speeds ω1 and ω2 are combined in the differential system are transmitted to an outlet body means that the angular speeds ω1 and ω2 are combined in the differential system to give at the differential outlet the angular speed ω3 which is then transmitted to an outlet body.

The invention equally refers to the powertrain making it possible to carry out the method of the invention.

The powertrain for electric bicycle comprises:
- a differential system comprising a ring gear having an inner surface and an element cooperating with this inner surface, the periphery of said element defining a surface containing the geometric center of the ring gear,
- a first motor arranged to impart an angular speed to a first inlet of the differential system,
- an inlet body arranged to impart an angular speed to a second inlet of the differential system,
- an outlet body, and
- a second motor for regulating the assistance to the rider connected either to the second inlet in combination with the inlet body, either to the outlet body,
wherein the axis of the outlet body, the main axis of the differential system, the axis of the first motor and the axis of the second motor are coincident and/or concentric with the axis of the inlet body.

The inlet body is an element known by a person skilled in the art. The inlet body constitutes an interface between the interior and the exterior of the carter, or box in which the powertrain is accommodated. The inlet body may be the interface with an upstream transmission. Alternatively, the inlet body may be directly connected or coincident with the crankset.

The outlet body is an element known by a person skilled in the art. The outlet body constitutes an interface between the interior and the exterior of the carter, or box in which the powertrain is accommodated. The outlet body may be the interface with a downstream transmission. Alternatively, the outlet body may be directly connected or coincident with one of the wheel rims.

Preferably, the inlet body is associated, directly or indirectly (via a transmission), to at least the action of a rider on a crankset, that is, to the axis of a crankset.

In certain cases, the inlet body may be coincident with the crankset. The powertrain is then located at crankset level, i.e. concentric to the crankset axis, and a transmission is provided at the outlet body level.

In other cases, the powertrain may comprise an upstream transmission, of the chain or belt type, for example, connecting the crankset to the inlet body of the powertrain (to the differential system). In this case, the powertrain is not concentric to the crankset. It may be concentric to the axis of a drive wheel, and in this case no downstream transmission is provided on the outlet body. It could equally be located neither concentrically to the crankset axis, nor concentrically to a wheel axis; in this case, an upstream transmission and a downstream transmission may be provided.

In the remainder of this application, the expression "connected to the" indistinctly refers to a direct or indirect connection (via a transmission).

In order to obtain maximum compactness, the axis of the outlet body, the main axis of the differential system, the axis of the first motor and the axis of the second motor are coincident and/or concentric with the axis of the inlet body.

By aligning/conflating these axes, an extremely compact system is obtained. When the two motors are disposed on opposite sides of the differential system, heat dissipation is optimally managed.

The differential system here is a system having a ring gear with an inner surface. The element that cooperates with this inner surface contains the geometric center of the ring gear, that is to say that this element has a periphery evolving inside the ring gear, in contact with the ring gear at least one point, and the geometric center of the ring gear is at all times included in the surface defined by the periphery. This definition extends on the context of a perpendicular cut to the main axis of the differential. Therefore, the differential system cannot be an epicycloidal gear train, the planet wheel of such a train not in fact satisfying this definition. There are, however, several other types of differential systems satisfying this condition, such as, for example, the harmonic systems or the cycloidal systems, simple or complex, possibly comprising an intermediary transmission wheel such as, for example, those described in US4969376A, equally reproduced in WO2023/042167A1.

The ring gear has an inner surface which may, for example, bear an inner toothing, and the element cooperating with this inner surface is thus an element arranged to engage in this toothing. The element presents in this case an outer peripheral toothing apt to engage in the toothings of the ring gear and the geometric center of the ring gear is at all times including in the surface defined by the engagement circle (perimeter or periphery of the toothings) of this element inside the ring gear.

The term toothing is not limitative in a precise manner, but generally designates a relief capable of engaging in complementary relief. A person skilled in the art knows how to select the shape of the teeth depending on the application, the sizes, the forces implied, etc....

The invention is not always limited to a toothed engagement. The ring gear may equally cooperate with the inner element by adhesion. The invention thus covers equally notably rolling systems, based on adhesion.

For the rest of the description, we will use the engagement alternative, for the sake of clarity, but it is interchangeable with a rolling system.

In general, the differential system applies an R reduction ratio established according to the equation: $\frac{ωα - ωγ}{ωβ - ωγ} = R$

Wherein ωα, ωβ and ωγ are the angular speeds of the connections of the differential.

A differential has two so-called "slow" connections and one so-called "fast" connection. Preferably, the first motor is associated with the fast connection to effectively impact the speed of the outlet body.

The reduction ratio RDU of the powertrain is defined as: $\frac{ω O}{ωI} = RDU$

Wherein ω*O* is the angular speed of the outlet body and ωI the angular speed of the inlet body.

The RDU reduction ratio is modulated by the first motor, either naturally continuously or artificially discretely. The second motor is dedicated to regulating assistance in torque.

In certain cases, the powertrain imparts motion on at least one of the bicycle's two wheels even if the rider does not pedal. If this mode is limited to a low speed, it is notably a "walk assist" mode.

In certain cases, the powertrain can operate in non-assisted mode. This mode may be engaged for example automatically when the rider imparts sufficient or excess force, notably in relation to legal constraints (above a threshold speed). This mode may equally be useful for the bicycle to be operational when the battery is almost flat. In this mode, the motor M1 and the motor M2 can be controlled; only the constraint of zero net assistance is respected.

In certain cases, *ω0* may be negative. This is reverse gear mode.

In certain cases, the speed of the inlet body *ωI* or that of the outlet body *ω0* is blocked at zero. This is notably the case of the anti-theft mode.

In certain cases, the first motor and/or the second motor acts as generator. If the accumulated power of the two motors is negative, this is a case of "regenerative braking" mode.

Further, the powertrain may comprise a reducer system arranged to combine the action of the second motor and of the outlet or the action of the second motor and the inlet body. Preferably, the axis of the reducer associated to the second motor may be coincident with the inlet and outlet axes.

The powertrain of the invention is sufficiently compact to be installed at crankset level or at wheel level.

Preferably, in order to optimize the heat dissipation of the motors while maintaining a balance, the first motor and the second motor are placed on opposite sides of the element of the bicycle on which the powertrain is fixed. For example, the motors are placed on opposite sides of a wheel or on opposite sides of the crankset.

The differential system may be a cycloidal transmission system (or gear train).

This type of system enables a high reduction ratio for a particularly compact volume. In this case, the element that engages in the ring gear is a toothed wheel having smaller diameter than the inner diameter of the ring gear and has a fewer number of teeth than the number of teeth of the ring gear. An eccentric motion is applied by the eccentric excitation on which the toothed wheel is mounted. Due to its engagement in the ring gear and the eccentric excitation, the toothed wheel follows a cycloidal motion. The wheel is associated to one or more transfer eccentrics associated to an eccentric carrier(s).

The ring gear, the eccentric excitation and the eccentric carrier can each operate as inlet or as outlet of the system. The eccentric excitation is a so-called "rapid" connection whereas the ring gear and the eccentric carrier are so-called slow connections.

In a cycloidal transmission, one or several cycloidal wheels engage on the inside of a cycloidal ring gear whose number of teeth, Zc, is slightly greater to the number of teeth of the wheels, *Zr: **Zr<Zc.***

For the sake of clarity, let us assume, without loss of generality for the sake of explanation, that the transmission has only one cycloidal wheel.

An eccentric excitation constitutes a first connection of the transmission. Its main axis is concentric relative to the ring gear. The secondary axis, which is slightly eccentric, is concentric relative to the wheel.

Let us consider that the ring gear is immobile, here as well, without loss of generality and for the time of the explanation only. The rotation of the eccentric excitation forces the wheel to roll within the ring gear, while being engaged to it. For one revolution of the eccentric excitation, an immaterial engagement point between the deformable wheel and the ring gear has completed one revolution. At the end of this displacement the wheel has turned at an angle corresponding to the difference of the number of teeth between the ring gear and the wheel. Accordingly, it is possible to opt for a difference of just one tooth and thus obtain a very small angular displacement of the wheel.

We note that the displacement of the wheel is not a purely circular movement, but rather cycloidal.

The cycloidal transmission system comprises at least one transfer eccentric, preferably at least two transfer eccentrics for greater robustness, arranged to transfer the cycloidal motion of the wheel to the eccentric carrier where the rotation axis is coincident with the rotation axis of the ring gear.

In some embodiments, the cycloidal transmission system comprises at least one transfer eccentric, associated to an eccentric carrier, arranged for transferring the cycloidal motion of the toothed wheel to the outlet, where the rotation axis is coincident with the rotation axis of the ring gear.

To be capable of transmitting this minor displacement towards a purely circular movement, as required, it is necessary to utilize the transfer eccentric(s), which assure the connection between the wheel and the eccentric carrier.

The eccentric carrier moves concentrically in a purely circular motion, relative to the main transmission axis. The transfer eccentrics have a main axis respectively concentric to axes fixed to the eccentric carrier and a secondary axis respectively concentric to axes fixed to the wheel. To assure the operation of the system, the eccentricity of the eccentric excitation and that of the transfer eccentrics is identical. Although technically a single transfer eccentric is sufficient, it is possible to use two or even a more important number to improve the robustness of the system.

Thanks to the utilization of the transfer eccentrics, the eccentric carrier, which forms the second connection of the transmission, has concentrically turned to the main axis of the system of a weak angle corresponding to the difference of the number of teeth between the ring gear and the wheel such that transmission ratio is: $\frac{ωp}{ωe} = R = \frac{Zr - Zc}{Zr}$ *ωp* being the angular speed of the eccentric carrier [rad/s], *ωe* being the angular speed of the eccentric excitation [rad/s].

The utilization of transfer eccentric is one of the methods of returning to a circular movement but not the only one. This is not considered as limitative.

Generally speaking, where the ring gear is not fixed but constitutes a third connection point of the system, the transmission transforms into a differential system where the kinematic equation may be generalized: $\frac{ωp - ωc}{ωe - ωc} = R = \frac{Zr - Zc}{Zr}$ *ωc* being the angular speed of the ring gear (rad/s).

Generally speaking, eccentric excitation, the ring gear, and the eccentric carrier are the three connections of the differential and can each operate as inlet or as outlet of the system. The eccentric excitation is a so-called "rapid" connection whereas the ring gear and the eccentric carrier are so-called "slow" connections.

In one embodiment, the first motor is connected to the eccentric excitation and *ω*1 = *ωe,* and the inlet body is connected to the ring gear and *ω*2 = *ωc,* the outlet is via the eccentric carrier *ω*3 = *ωp.* The second motor may be connected, potentially via a reducer, either to the ring gear in combination with the inlet body, or at the outlet, to the outlet body connected to the eccentric carrier.

In another embodiment, the inlet body is connected to the eccentric excitation and *ω*2 **=** *ωe,* and the first motor is connected to the ring gear and *ω*1 = *ωc,* the outlet being via the eccentric carrier and *ω*3 = *ωp.* The second motor may be connected, potentially via a reducer, either to the eccentric excitation in combination with the inlet body, or at the outlet, to the outlet body connected to the eccentric carrier.

In another embodiment, the first motor is connected to the eccentric excitation and *ω*1 ***=** ωe,* and the inlet body is connected to the eccentric carrier and *ω*2 = *ωp,* the outlet being via the ring gear *ω*3 = *ωc.* The second motor may be connected, potentially via a reducer, either to the eccentric carrier in combination with the inlet body, or at the outlet, to the ring gear.

In another embodiment, the inlet body is connected to the eccentric excitation and *ω*2 **=** *ωe,* and the first motor is connected to the eccentric carrier and *ω*1 = *ωp,* the outlet being via the ring gear and *ω*3 = *ωc.* The second motor may be connected, potentially via a reducer, either to the eccentric excitation in combination with the inlet body, or at the outlet, to the ring gear.

In another embodiment, the first motor is connected to the eccentric carrier and *ω*1 *= ωp,* and the inlet body is connected to the ring gear and *ω*2 = *ωc,* the outlet being via the eccentric excitation and *ω*3 = *ωe.* The second motor may be connected, potentially via a reducer, either to the ring gear in combination with the inlet body, or at the outlet, to the eccentric excitation.

In another embodiment, the first motor is connected to the ring gear and *ω*1 = *ωc,* and the inlet body is connected to the eccentric carrier and *ω*2 = *ωp,* the outlet being via the eccentric excitation and *ω*3 = *ωe.* The second motor may be connected, potentially via a reducer, either to the eccentric carrier in combination with the inlet body, or at the outlet, to the eccentric excitation.

The advantage of a cycloidal transmission is that it offers the possibility of a major reduction ratio for reduced size and complexity.

Preferably, the cycloidal transmission of the invention comprises at least two wheels. In fact, the main drawback, in the case of a cycloidal transmission, utilizing transfer eccentrics, comprising a single cycloidal wheel is that the movement of the latter causes rather an important imbalance. The most common solution to this problem is to stack several identical transmission units but with phasing. The excitation and transfer eccentrics can then be respectively merged. The use of a single ring gear and of a single eccentric carrier is equally possible.

In one variation to the system described, the ring gear can be replaced by a set of Zc cylindrical axes arranged in parallel and in a regular manner in the periphery of an axis carrier.

In another variation, the transfer eccentrics are not implemented such that the axes of the eccentric carrier rub directly in the drilled holes in the wheel. With desirable geometry, this configuration offers the same kinematics as the system utilizing transfer eccentrics.

These two latter variations are known in the state of the art.

### Cycloidal transmission system variant: double cycloidal engagement system.

In a second implementation of cycloidal transmission technology, two engagements or gear-meshes can be utilized, possibly concentrically. Just as in the cycloidal transmission system described above, an eccentric excitation, which constitutes a first connection of the differential system, supports, on its eccentric axis, a wheel, free to rotate along the eccentric axis. Every type of joint with at least one degree of freedom of rotation may be utilized. Nevertheless, the joints with weak friction will be prioritized. This wheel, by virtue of its shape (outer toothing preferably) and by the kinematics imposed thereupon by the eccentric excitation, engages in the outer ring gear (inner toothing). This constitutes the first engagement. Moreover, the wheel is equally equipped with an internal toothing axially juxtaposed next to its connection with the eccentric excitation. Further, a sprocket, which constitutes a second connection of the cycloid system, is rotatably articulated on the main axis of the cycloid module. The sprocket is equipped with an outer toothing compatible with the inner toothing of the wheel, such that it engages with a second engagement.

This "intermediary" wheel is thus a cylinder presenting on its outer surface means of adhesion (engagement) to the inner surface of the ring gear in which it evolves and, on its inner surface means of adhesion (engagement) to the sprocket around which it evolves. The toothed wheel thus presents an internal or inner surface equally toothed arranged to engage with a sprocket rotatably articulated around an axis coincident with the axis of the ring gear. The ring gear, rotatably mobile along the main axis of the cycloid module, constitutes a third and last connection to the differential system.

If certain geometric conditions are respected, the cycloidal motion of the intermediary wheel and its engagement to the sprocket imposes a simple rotation on the latter.

To assure the working of the system, the eccentricity of the two cycloid engagements must be equal (unless a flexibility is introduced into the system).

The number of teeth of the ring gear (Zc), of the wheel (outer Zre and inner Zri), of the sprocket Zp satisfy the ratios: $Zc > Zre$ $Zri > Zp$

The R ratio of this system is defined thus: $\frac{ωp - ωc}{ωe - ωc} = R = - \frac{Zri}{Zre} . \frac{Zc - Zre}{Zp} - \frac{Zri - Zp}{Zp}$

A special case is given by *Zre = Zri = Zc -* 1 *= Zp* + 1, which simplifies the equation into: $\frac{ωp - ωc}{ωe - ωc} = R = - \frac{2}{Zp}$

The combination of two cycloid-type engagements advantageously makes it possible to eliminate the transformation of the cycloidal motion into circular movement by using transfer eccentrics. There are thus fewer mechanical joints, whereby decreasing the cost, weight, bulkiness, complexity and play. There are few moving parts, decreasing the inertia of the transmission. Moreover, eccentrically-moving masses decrease, thereby reducing parasitic vibrations. This solution is therefore more advantageous.

Generally speaking, the excitation eccentric, the ring gear, and the sprocket are the three connections of the differential and can each operate as inlet or as outlet of the system. The eccentric excitation is a so-called "rapid" connection whereas the ring gear and the sprocket are so-called "slow" connections.

The differential system may be a harmonic transmission system.

In a harmonic transmission, the element engaging with the toothing inner of the ring gear is a deformable toothed wheel. The number of teeth of the ring gear *Zc* is slightly greater than the number of teeth of the deformable wheel *Zr* : *Zr* < *Zc.*

A wave generator is guided in rotation around the main axis of the gear train. It has a certain number of lobes, *Zl*, two in the most usual cases, but one configuration based on 1 lobe is foreseeable. Nevertheless, the number of lobes must be largely lower than the number of teeth of the ring gear and of the deformable wheel: *Zl* « *Zr < Zc.*

Let us consider that the ring gear is immobile, without loss of generality and for the time of explanation only. The rotation of the wave generator forces the deformable wheel roll within the ring gear, while being engaged to each end of the lobes. For one revolution of the wave generator, an immaterial engagement point between the deformable wheel and the ring gear has completed one revolution. At the end of this displacement, the deformable wheel has rotated concentrically to the main axis of the system by a small angle corresponding to the difference of the number of teeth between the ring gear and the deformable wheel such that the transmission ratio is: $\frac{ωr}{ωg} = R = \frac{Zr - Zc}{Zr}$ *ωr* being the angular speed of the flexible wheel [rad/s] and *ωg* being the angular speed of the wave generator [rad/s].

In the case where the ring gear is not fixed but constitutes a third connection point of the system, the transmission transforms into a differential system where the kinematic equation may be generalized: $\frac{ωr - ωc}{ωg - ωc} = R = \frac{Zr - Zc}{Zr}$ *ωc* being the angular speed of the ring gear [rad/s].

Generally speaking, the wave generator, the ring gear and the wheel are the three connections of the differential and can each operate as inlet or as outlet of the system. The wave generators is a so-called "rapid" connection whereas the ring gear and the deformable wheel are so-called "slow" connections.

In one embodiment, the first motor is connected to the wave generators and *ω*1 = *ωg,* and the inlet body is connected to the ring gear and *ω*2 = *ωc,* the outlet is via the flexible wheel and *ω*3 = *ωr.* The second motor may be connected, potentially via a reducer, either to the ring gear in combination with the inlet body, or at the outlet, to the flexible wheel.

In this embodiment, if the second motor is connected to the ring gear in combination with the inlet body, this combination preferably does not occur via a harmonic transmission.

This special embodiment may potentially be excluded from the invention, when the second motor is associated or connected to the inlet body. In this case, the combination is achieved for example with the help of a cycloidal or epicycloidal reducer.

In another embodiment, the inlet body is connected to the wave generator and *ω*2 = *ωg*, and the first motor is connected to the the ring gear and *ω*1 = *ωc,* the outlet being via the flexible wheel and *ω*3 = *ωr.* The second motor may be connected, potentially via a reducer, either to the wave generator in combination with the inlet body, or at the outlet, to the flexible wheel.

In another embodiment, the first motor is connected to the wave generators and *ω*1 **=** *ωg,* and the inlet body is connected to the flexible wheel and *ω*2 = *ωr,* the outlet is via the ring gear *ω*3 = *ωc.* The second motor may be connected, potentially via a reducer, either to the flexible wheel in combination with the inlet body, or at the outlet, to the ring gear.

In this embodiment, preferably, if the second motor is connected to the outlet ring gear, this connection is not achieved via a harmonic transmission. This special embodiment may potentially be excluded from the invention, when the second motor is associated or connected to the outlet. In this case, the combination is achieved for example with the help of a cycloidal or epicycloidal reducer.

In another embodiment, the inlet body is connected to the wave generator and *ω*2 = *ωg,* and the first motor is connected to the flexible wheel and *ω*1 = *ωr,* the outlet being via the ring gear and *ω*3 = *ωc.* The second motor may be connected, potentially via a reducer, either to the wave generator in combination with the inlet body, or at the outlet, to the ring gear.

In another embodiment, the first motor is connected to the flexible wheel and *ω*1 = *ωr,* and the inlet body is connected to the ring gear and *ω*2 = *ωc,* the outlet is via the wave generator and *ω*3 = *ωg.* The second motor may be connected, potentially via a reducer, either to the ring gear in combination with the inlet body, or at the outlet, to the wave generator.

In another embodiment, the first motor is connected to the ring gear and *ω*1 **=** *ωc,* and the inlet body is connected to the flexible wheel and *ω*2 = *ωr,* the outlet is via the wave generator and *ω*3 = *ωg.* The second motor may be connected, potentially via a reducer, either to the flexible wheel in combination with the inlet body, or at the outlet, to the wave generator.

The advantage of a harmonic transmission is that it offers the possibility of a major reduction ratio for reduced size and complexity compared to known epicycloidal gear trains.

In a harmonic transmission, the deformable wheel undergoes numerous important deformation cycles. This may lead to the need for a long tulip and thus more overall bulkiness or fatigue resistance problems. The contact between the wave generator of the deformable wheel may introduce a lot of friction. One solution to this problem is the use of balls or rollers between the two bodies, as illustrated for example at https://commons.wikimedia.org/wiki/File:Harmonic-drive-explanation-contrast.gif.

Like for the wheel of the cycloidal gear train, the deformable wheel of the harmonic transmission covers, inside its toothings, a surface containing the geometric center of the ring gear.

The movement of the deformable wheel of the harmonic transmission is a rotational movement around the main axis of the gear train, superimposed by a deformation of the tulip and of the toothed part at the level of the constraint zones applied by the lobes of the wave generator.

Other equivalent transmission systems, notably variations of the cycloidal and harmonic systems, can equally be utilized in the scope of the invention.

For example, it may be a transmission system similar to the one described in WO2023/042167A1 where an intermediary transmission wheel, preferably flexible like in a harmonic transmission, is accommodated between the ring gear and a toothed wheel of a cycloid system, driven by cycloidal motion. This transmission wheel presents a toothing on its outer face, to engage with the ring gear, and on its inner face to engage with the toothed wheel. The number of gearwheel transmission teeth may be adjusted to increase the reduction ratio.

In a preferred embodiment, the differential system is a cycloidal gear train (or transmission).

The second inlet of the differential system receives the torque from the rider via the crankset, which includes a crankset axis, through the inlet body.

The first and second motors are powered by a battery, with the help of suitable control electronics.

The first motor M1 may be speed-controlled so as to control the transmission ratio of the motor reducer to the desired ratio.

The second motor M2 may be torque-controlled to relieve the rider's effort in accordance with the selected level of assistance.

In a first variation of the invention, the second motor M2 regulates the assistance the rider to the inlet of the differential system. A reducer is utilized to make the operating speeds/torques of the rider and the electric motor compatible with the equation: $\frac{ωI}{ωM 2} = RRM 2$ *ωM*2 being the angular speed of the motor M2 [rad/s], *ωI* being the angular speed of the inlet body [rad/s] and ***RRM2*** being the ratio of the reducer associated to the motor M2. The second motor regulating assistance to the rider is thus connected to the second inlet in combination with the action of the rider. The combination is preferably effected with the help of a reducer whose the rotation of the second motor is associated to the inlet, the inlet body is associated to the outlet, the outlet having the angular speed ω2. It refers, for example, to an epicycloidal, cycloidal or harmonic reducer or any other suitable reducer.

Preferably, the second motor is not associated to the wave generators of a harmonic transmission to be combined to the action of the rider.

Preferably, the reducer at the outlet of the motor M2 is a cycloidal gear train in which either the eccentric carrier (or the sprocket following the type of cycloidal gear train utilized), or the ring gear is fixed such that the differential system is downgraded to a simple reducer. However, any other reducersystem may equally be utilized.

In one preferred embodiment according to this first variation, the differential system is a cycloidal transmission and the first motor applies an angular speed ω1 to the eccentric excitation which is the first inlet, the second motor and the inlet body impart an angular speed ω2 to the ring gear which is then the second inlet. The outlet is thus the eccentric carrier which transmits an angular speed ω3 to the outlet body.

In another preferred embodiment according to this first variation, the differential system is a cycloidal transmission and the first motor applies an angular speed ω1 to the eccentric excitation which is the first inlet, the second motor and the inlet body impart an angular speed ω2 to the eccentric carrier which is then the second inlet. The outlet is thus the ring gear which transmits an angular speed ω3 to the outlet body.

In a second variation of the invention, the second motor regulating the assistance to the rider is connected to the outlet of the differential transmission. A reducer system may be utilized to combine the action of the second motor and of the outlet.

The possible variations described for the method of the invention equally apply to the structure of the powertrain.

Regardless of the variations and embodiments, no-return means, such as, for example, one or several free wheels, may also be provided, albeit optionally.

For example, a free wheel is associated inlet body, allowing the crankset to drive the system but preventing the system from driving the crankset. This function is essentially dictated by security considerations of the rider. Nevertheless, this free wheel remains optional.

A free wheel may for example equally (or alternatively) connect the inlet body and the outlet. Accordingly, it is impossible for the speed of the outlet body to be lower than the speed of the inlet body:*ωO* ≥ *ωI.* The aim is to assure the operationality of the bicycle even in case of default of the system (flat battery or, to a lesser extent, certain faults).

Other free wheel arrangements are equally foreseeable. A person skilled in the art knows how to implement the necessary free wheels judiciously.

### Detailed description of the invention

The invention will now be explained in greater detail, with the help of the accompanying drawings, wherein:
Figure 1 is general scheme of the transmissions between the powertrain of the invention and the elements outside this group;
Figure 2 is a block scheme illustrating the method of the invention according to which the second motor is installed in an inlet of the differential;
Figure 3 is a simplified version of the block scheme of figure 2;
Figure 4 is a block scheme illustrating the method of the invention according to which the second motor is installed in an outlet of the differential;
Figure 5 is a simplified version of the block scheme of figure 4;
Figure 6 illustrates the architecture of a powertrain of the invention operating in accordance with the principle of figure 3, putting into practice a cycloid-type differential;
Figure 7 illustrates the architecture of another powertrain of the invention operating according to the principle of figure 3, putting into practice a cycloid-type differential;
Figure 8 illustrates the architecture of another powertrain of the invention operating according to the principle of figure 3, putting into practice a cycloid-type differential;
Figure 9 illustrates the architecture of another powertrain of the invention operating according to the principle of the figure 3, putting into practice a cycloid-type differential;
Figure 10 illustrates the architecture of a powertrain of the invention operating according to the principle of figure 3, putting into practice a double engagement cycloid-type differential;
Figure 11 illustrates the architecture of another powertrain of the invention operating according to the principle of figure 3, putting into practice a double engagement cycloid-type differential;
Figure 12 illustrates the architecture of another powertrain of the invention operating according to the principle of figure 3, putting into practice a double engagement cycloid-type differential;
Figure 13 illustrates the architecture of another powertrain of the invention operating according to the principle of figure 3, putting into practice a double engagement cycloid-type differential;
Figure 14 is a side view of a double engagement, cycloid-type differential system,
Figure 15 is a sectional view along plane B of the device of figure 14, and
Figure 16 is a sectional view along plane C of the device of figure 14.

The identical elements are identified in the different figures by the same reference numbers, without limitation to the utilization of a single component, that is to say, for example, that the ring gear to which reference is made in a figure may have a shape, a size, a material different to the ring gear illustrated in another figure.

The variations of the different embodiments described below are not mutually exclusive, provided that they are technically compatible.

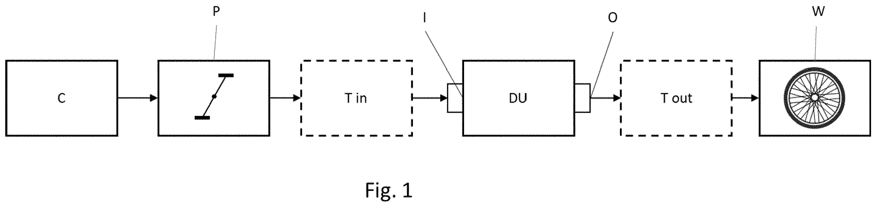

Figure 1 generally illustrates the transmission ratios between a DU powertrain according to the invention and the elements outside this group. The elements illustrated in dotted lines are optional according to the location of the powertrain on the bicycle.

The DU powertrain comprises an inlet body I associated to a crankset P on which a rider C can act, and an outlet body O associated to a wheel W. The term "associated" indicates that a direct or indirection ratio, via a T transmissions, may be provided as the case may be.

When the powertrain DU is situated at the crankset P (i.e. concentric to the axis of the crankset), the outlet body O is advantageously coupled to via transmission means to at least one wheel of the bicycle T out. These transmission means are for example a chain or a belt.

When the powertrain DU is situated at a wheel W (i.e. concentric to a wheel), it is the axis of the crankset that is advantageously coupled to the T in transmission means upstream of the powertrain DU. These transmission means are for example a chain or a belt.

If the powertrain is neither concentric to nor at a W wheel, nor to the axis of the crankset, it may be possible to have a transmission simultaneously T in upstream and T out downstream.

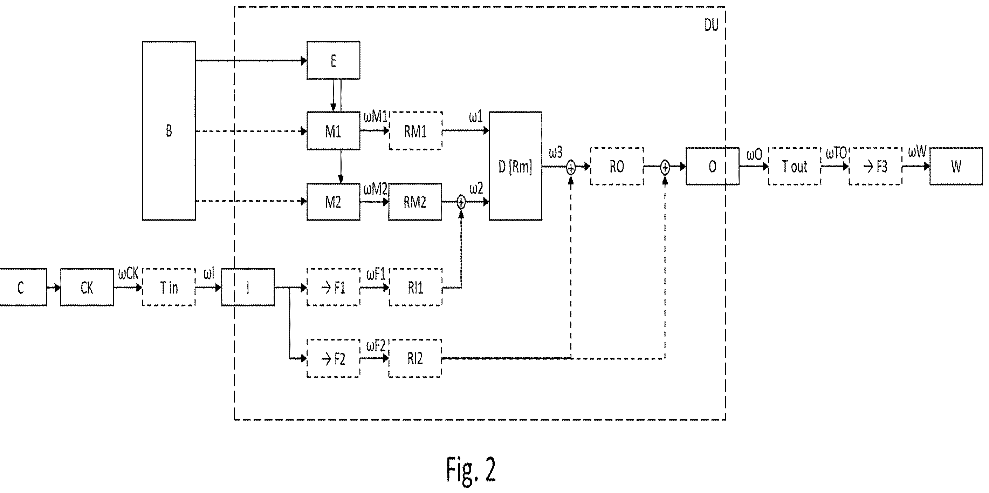

In a first variation of the invention, illustrated in the Figure 2, the second motor M2 assists the rider when entering the differential system.

Regarding figure 2, a method of assisted differential transmission for electric bicycle comprising the following stages:
- an angular speed ω1 is applied by action of a first motor M1 to a first inlet of a differential system D; an RM1 reducer may optionally be inserted between the two.
- an angular speed ω2 resulting from the action of a rider C on a crankset CK combined with that of a second motor M2 with the help of an RM2 reducer is applied to a second inlet of the differential system D; the axis of the crankset CK imparts an angular speed ωCK to an inlet body I of the powertrain DU, potentially via a T in transmission (optional according to the location of the DU group on the bicycle) .

The angular speeds ω1 and ω2 are combined in the differential system D and transmitted to an outlet body O with an angular speed ω3. Optionally, an RO reduceris installed between the outlet of the differential D and the outlet body. An optional free wheel F1 is installed between the inlet body I and the second inlet of the differential system D, optionally via an RI1 reducersystem. The angular speed at the outlet of the free wheel F1 is denoted ωF1. The function of this free wheel is to allow the inlet body to drive the system but to prevent the system from driving the inlet body. This function is essentially dictated by security considerations of the rider. Nevertheless, this free wheel remains optional.

Another optional free wheel F2 is illustrated here between the inlet body I and the outlet O, with potentially a reducer RI2 between the two. The angular speed at the outlet of the free wheel F2 is denoted ωF2 the function of this free wheel is to make it impossible for the speed of the outlet sprocket to be lower than the speed of the inlet body: *ωO* ≥ *ωI.* The aim is to assure the operationality of the bicycle even in case of default of the system (flat battery or, to a lesser extent, certain faults) .

The motors M1 and M2 are powered by a battery B (which may be a single battery or distinct batteries).

The motors M1 and M2 are controlled by control unit E.

The RM2 reduceris utilized to make the operating speeds/torques of the rider and the electric motor compatible with the equation: $\frac{ωF 1}{ωM 2} = RRM 2$ *ωM*2 being the angular speed of the motor M2 [rad/s], *ω*F1 being the angular speed of the inlet body (after potential passage via the free wheel F1) and **RRM2** being the ratio of the reducer associated to motor M2.

The angular speed ωO at the outlet of the outlet body O is transmitted to a wheel W. According to the location of the powertrain on the bicycle, a transmission T out may be provided downstream of the outlet O (wTO), potentially completed by a free wheel F3, for transmitting an angular speed ωW to the wheel W.

The elements F1, RM1, RI1, RI2, RO, T in, T out, F3 are replaced by a connection when they are superfluous. In particular, when F2 is absent, all the branch including RI2 is omitted.

All the elements included in the DU powertrain are shown in the dotted box. The other elements are located outside the powertrain.

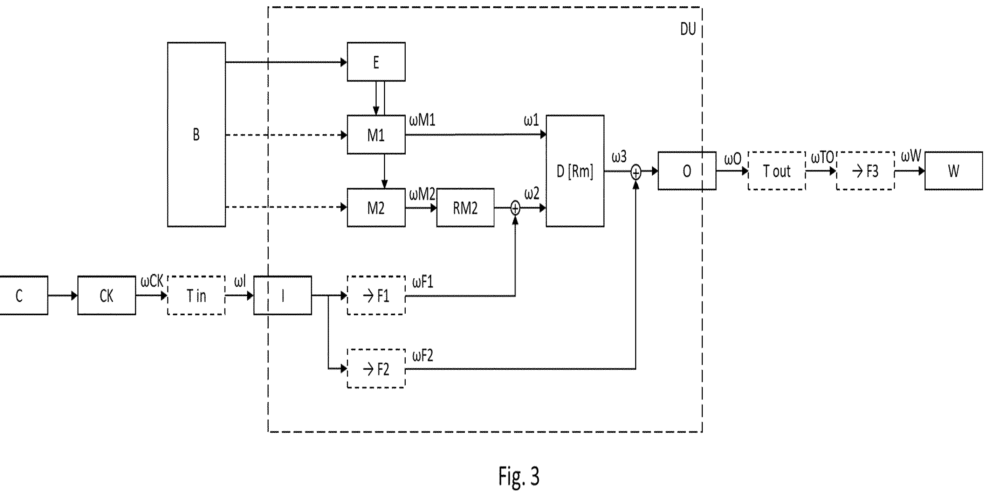

Figure 3 illustrates a simplified implementation of the embodiment described in figure 2, where the optional reducers RM1, RI1, RI2 and RO are omitted.

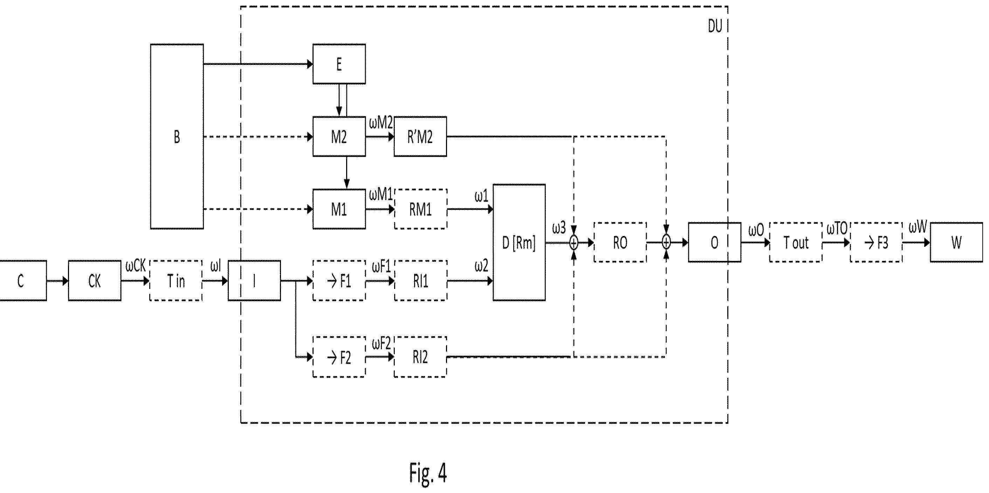

In a second variation of the invention, illustrated in Figure 4, the second motor M2 regulates the assistance at the outlet of the differential system.

In this embodiment, unlike the embodiment of figure 2, the angular speed ω2 resulting from the action of the rider C on crankset CK is not combined with that of a second motor M2. The angular speed ωM2 is combined with the angular speed ω3 at the outlet of the differential D via a reducerR'M2. The other elements are identical to the embodiment of figure 2.

The optional free wheel F1 is installed here between the inlet body and the second inlet of the differential system D (optionally with a reducer RI1). Its function is to allow the crankset to drive the system but to prevent the system from driving the crankset. This function is essentially dictated by security considerations of the rider. Nevertheless, this free wheel remains optional.

The other optional free wheel F2 is present here between the inlet body and the outlet O (via an optional reducer RI2). Its function is to make it impossible for the speed of the outlet sprocket to be lower than the speed of the inlet body (associated to the crankset) :*ωO* ≥ *ωI.* The aim is to assure the operationality of the bicycle even in case of default of the system (flat battery or, to a lesser extent, certain faults).

The motors M1 and M2 are also powered here by a battery B (which may be a single battery or distinctive batteries).

The motors M1 and M2 are controlled by control unit E.

The reducerR'M2 is utilized to render the speeds/outlet torque of the differential and of the electric motor M2 compatible, according to the equation: $\frac{ω 3}{ωM 2} = RR ′ M 2$ *ωM*2 the angular speed of the motor M2 being [rad/s] and **RR'M2** being the ratio of the reducerR'M2 associated to the motor M2.

That the motor M2 regulates the inlet or outlet assistance of the differential D, the system applies a reduction ratio Rm established according to the equation: $\frac{ωα - ωγ}{ωβ - ωγ} = Rm$

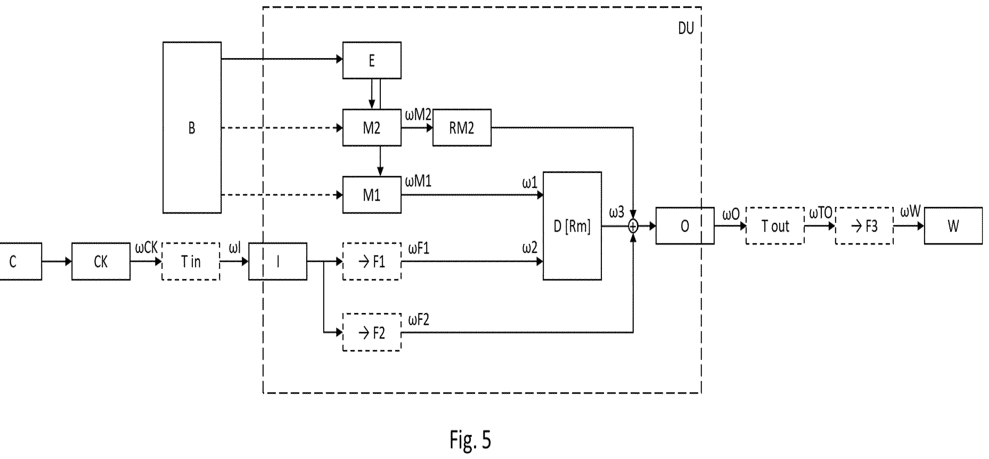

Figure 5 illustrates a simplified implementation of the embodiment described in figure 4, where the optional reducers RM1, RI1, RI2 and RO are omitted.

These two general operating modes having been established, structural embodiments under the form of architectures will now be described. The following figures (6 to 9) are based on the principle of figure 1 (M2 in inlet).

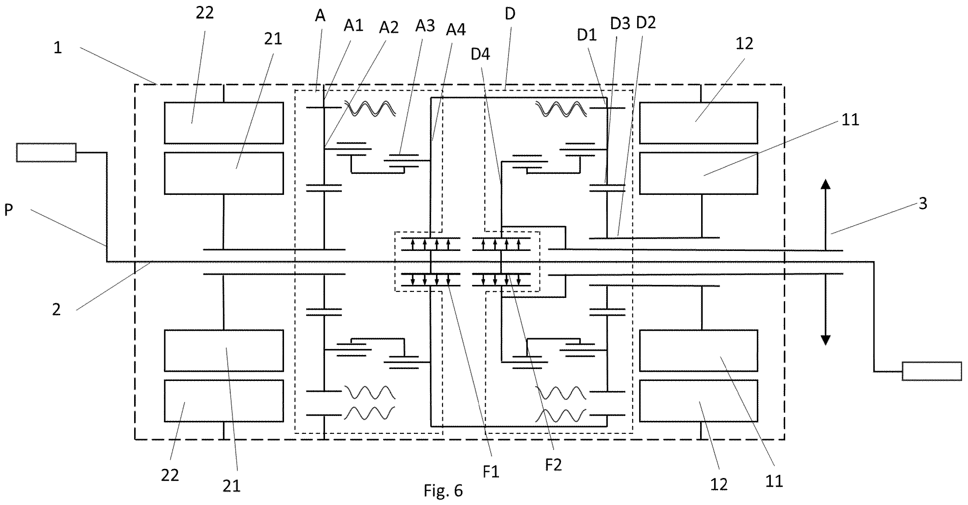

Regarding figure 6, powertrain for electric bicycle is integrated into a box 1 fixed to the frame of a bicycle, here at crankset P level.

The (mechanical) inlet is materialized by the crankset 2 axis which receives the energy from the rider via the pedals. The (mechanical) outlet of the system is an outlet body 3 supporting for example a toothed sprocket in the case of transmission by chain or a toothed pulley in the case of a transmission by belt, these two solutions being entirely compatible with the powertrain. Other transmission systems are equally possible and compatible (cardan, drive axis, other). The transmission here is towards one wheel of the bicycle, preferably the rear wheel.

The powertrain is electrically-powered by a battery of accumulators located elsewhere on the bicycle. Generally speaking, the powertrain, and especially the motors, exchange information (send - receive) with other electric and/or electronic elements of the bicycle: displays, command module, battery management system, sensors etc.... The CAN exchange protocol is one possible solution.

Inside the box 1, the mechanical combination is organized here concentrically around the axis 2 of the crankset. The transmission is concentrated between the two motors M1 and M2, both comprising a rotor, respectively 11 and 21, and a stator, respectively 12 and 22. This configuration enables the motors to be glued to the flanks on opposite sides of the box and to be cooled to the maximum. As the elements that release most energy by loss, this positioning of the motors is optimal from the heat point of view.

The rotor 21 of M2 is the inlet of a reducer A, illustrated in fine dotted line, which here for example is a cycloid gear train having a ring gear A1 fixed to the box 1. The ring gear A1 presents a toothing on its inner face and inside of which a toothed wheel A2 engages with cycloidal motion (represented by more or less closely-spaced ripples depending on the position of the point of contact with the ring gear, here at the top of the diagram), driving transfer eccentrics A3 associated to an eccentric carrier A4. The eccentric caarier is connected to the axis 2 of the crankset at the level of a free wheel F1, in order to combine the movement of the crankset and that of the second motor at the inlet of differential D, illustrated in fine dotted lines to the right of the reducer A. The eccentric carrier is at the outlet of the reducer.

The differential D is likewise a cycloid train here, having a ring gear D1, which is the inlet connected to the outlet of reducer A described above. The rotor 11 of the first motor is connected to the eccentric excitation D2, supporting the wheel D3. The outlet of the differential D is the eccentric carrier D4 which is connected to the outlet body 3.

The optional free wheel F2 described in relation to figure 1 here is arranged between the eccentric carrier D4 and the axis 2 of the crankset.

For this embodiment, as for the following embodiments and all other possible embodiments, abutments, roller and friction bearings of various types are used to guide the assembly. Several arrangements of these elements are possible but their effect is similar, to the extent that the inventive character of the invention does not depend on this.

M1 and M2 motors may be, independently, radial or axial flux motors.

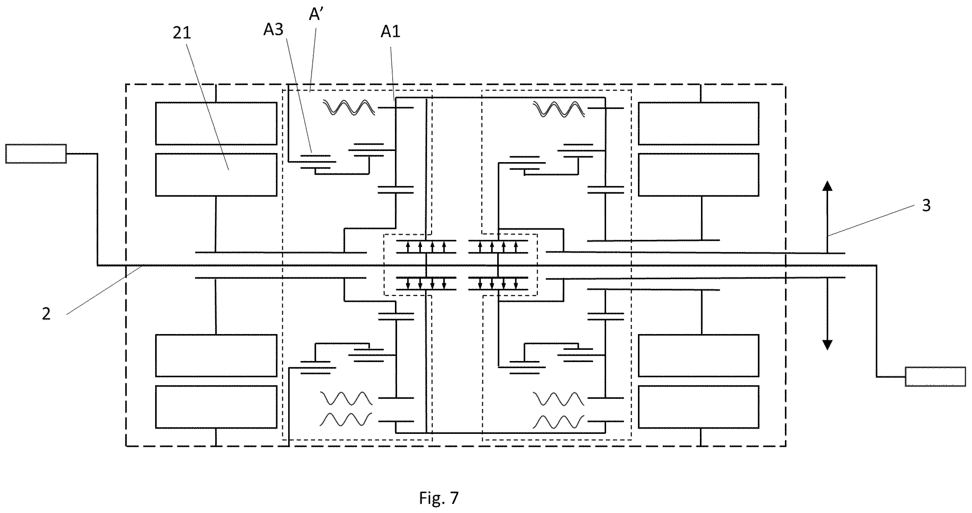

The embodiment illustrated in figure 7 differs from that of figure 6 in the implementation of reducer A. Here, the reducer A' is always a cycloid train, but the outlet here is the ring gear A1, while the eccentric carrier is fixed to the box 1.

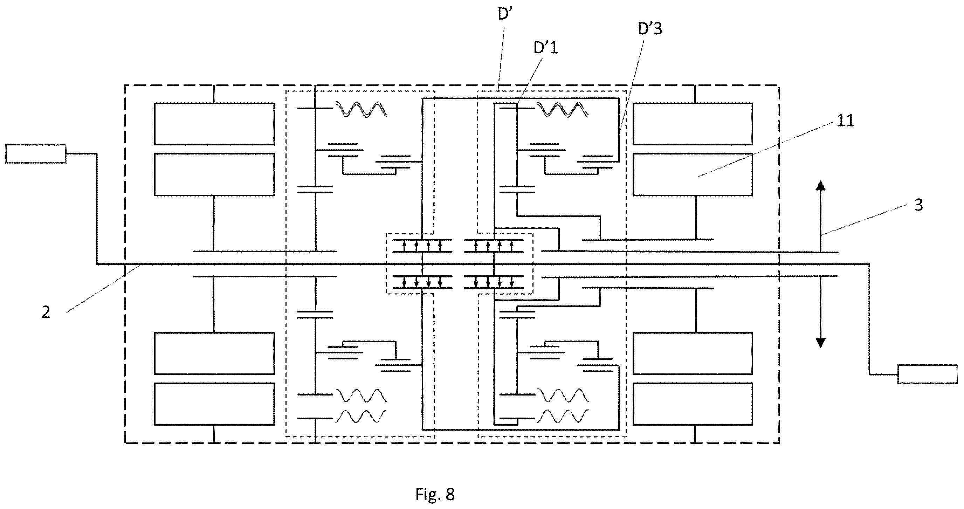

The embodiment illustrated in the figure 8 differs from that of figure 6 in terms of implementation of the differential D. Here is the ring gear D'1 which is the outlet of the differential D' whereas it is the eccentric carrier D'3 and the rotor 11 of the first motor M1 via the eccentric excitation which are arranged at the inlet of the differential.

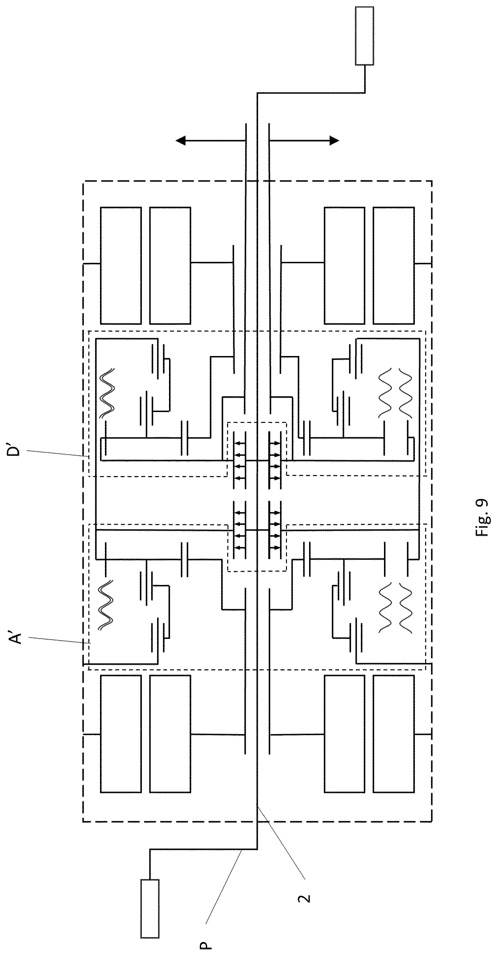

Figure 9 described an embodiment combining reducer A' illustrated in figure 7 and differential D' illustrated in figure 8.

Figures 6 to 9 have been described with cycloidal trains. Nonetheless, the cycloidal train can be replaced by any other type of reducer, such as, for example, an epicycloidal reducer, a harmonic reducer, or other.

Even so, the cycloidal transmission utilized for the differential can be replaced by all other differential such that the latter satisfies the condition that the periphery of the element evolving inside the ring gear contains, at all times, the geometric center of the ring gear. Unlike the use of an epicycloidal gear train for example, this assures the compactness of the system.

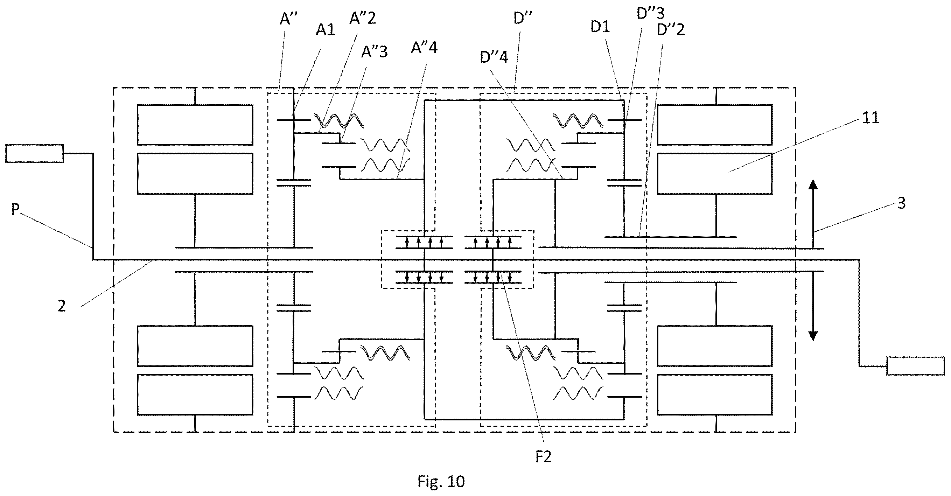

Figure 10 illustrates the implementation of the figure 6 wherein the reducer A and the differential D are both replaced by a double cycloidal engagement system.

Notably, a reducer A" comprises a ring gear A1 which presents a toothing on its inner face and inside of which is a toothed intermediary wheel A''2 on its outer face engages with a cycloidal motion (represented by more or less closely-spaced ripples depending on the position of the point of contact with the ring gear), equally toothed on its inner face A"3, an outlet sprocket A"4.

The differential D" here is likewise a double engagement system, having a ring gear D1, which is the inlet connected to the outlet of the reducer A" described above. The rotor 11 of the first motor is connected to the eccentric excitation D"2 driving the intermediary wheel D"3 moving in a cycloidal motion between the ring gear D1 and the sprocket D"4 which is the outlet of the differential D connected to the outlet body 3.

The optional free wheel F2 described in relation to figure 2 is arranged here between wheel D"4 and axis 2 of the crankset.

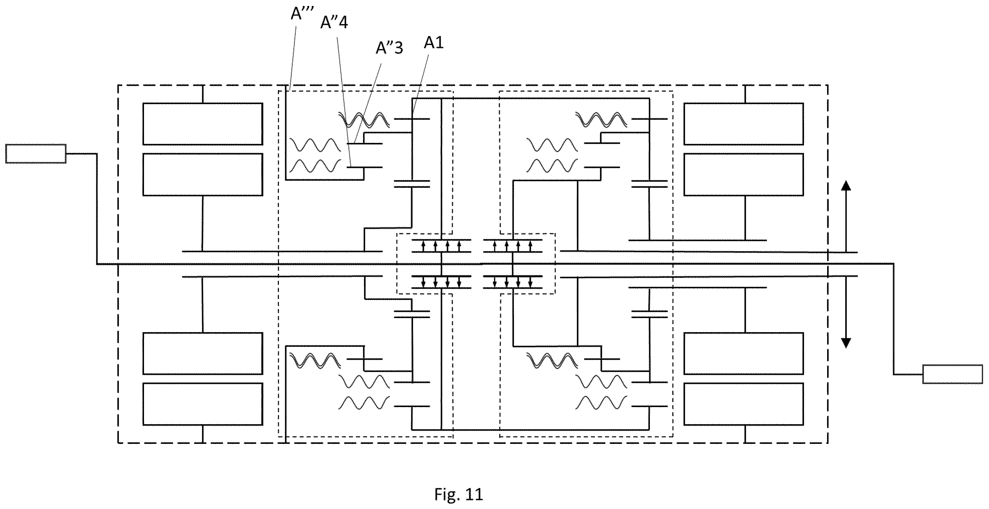

The embodiment illustrated in the figure 11 differs to the one of figure 10 in terms of implementation of reducer A''. Here, the reducer A'' is always a double engagement cycloid train, but the inlet here is the ring gear A1, the sprocket A"4 is fixed to the box.

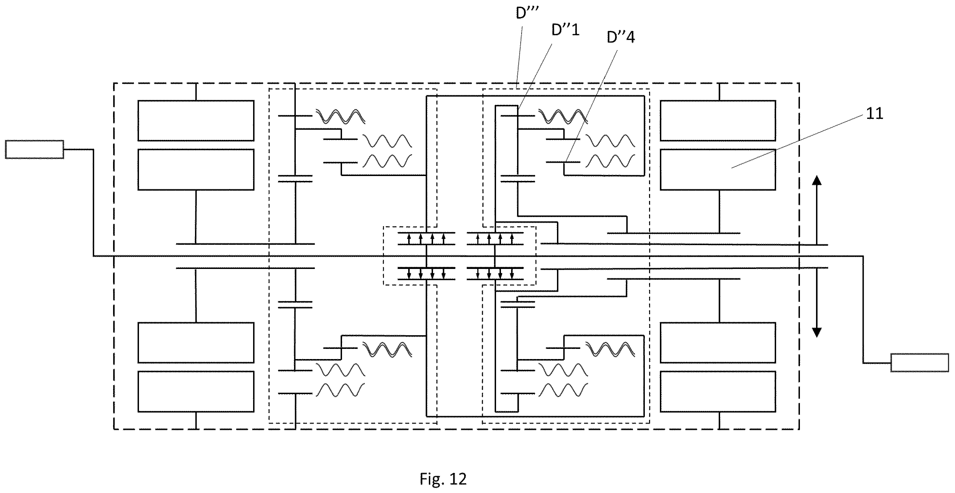

The embodiment illustrated in the figure 12 differs to the one of figure 10 in terms of implementation of the differential D". Here is the ring gear D"1 which is the outlet of the differential D" whereas it is the sprocket D"4 and the rotor 11 of the first motor M1 via the intermediary wheel which are arranged as inlet of the differential.

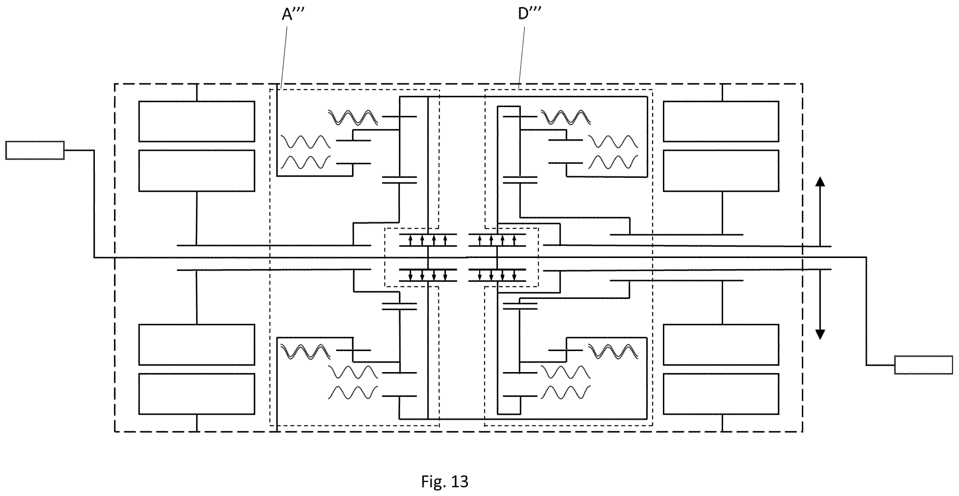

Figure 13 describes an embodiment combining the reducer A‴ illustrated in figure 11 and the differential D‴ illustrated in figure 12.

It is possible to position all the elements of the powertrain around a single axis.

In figures 6 to 13, the axis central is the axis of the crankset, which is coincident with the axis of the outlet body, i.e. the axis of a sprocket associated to a transmission permitting to drive one wheel of the bicycle. According to a similar embodiment, the axis central could be the outlet axis, advantageously the axis of a wheel for example, and the inlet the axis of a sprocket to which the action of the crankset would be transmitted.

The method of the invention and the associated powertrain thus provides for major flexibility in implementation.

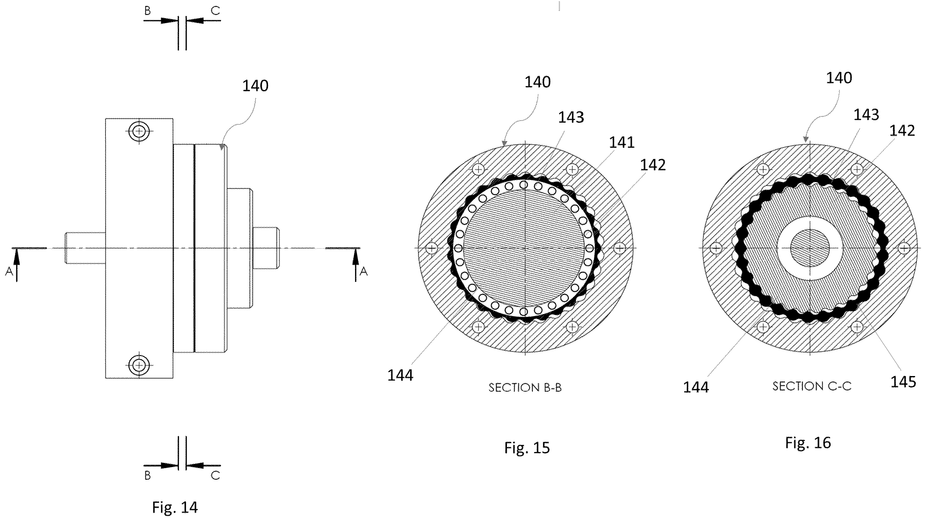

Figures 14 to 16 describe a cycloidal double engagement transmission 140, concentric here. Figure 14 is a profile view whereas figures 15 and 16 are sectional views along the B and C planes respectively.

Just as in the cycloidal transmission system described above, an eccentric excitation 141, which constitutes a first connection of the differential system, supports, on its eccentric axis, a wheel 142, free to rotate along the eccentric secondary axis of the eccentric excitation. Every type of connection with at least one degree of freedom of rotation may be utilized. This wheel 142, is endowed with an external toothing, engages in the outer ring gear 143 (with internal toothing). This constitutes the first engagement. Moreover, the wheel is equally equipped with an internal toothing axially juxtaposed next to its connection with the eccentric excitation 141. Further, a sprocket 144, which constitutes a second inlet of the cycloid system, is rotatably articulated on the main axis AA of the cycloid module. The sprocket is equipped with an outer toothing 145 compatible with the inner toothing of the wheel 142, such that it engages with a second engagement.

The ring gear 143, rotatably mobile along the main axis AA of the cycloid module, constitutes the third and last connection to the differential system.

The cycloidal motion of the intermediary wheel 142 and its engagement to the sprocket 144 imposes upon latter a simple rotation.

To assure the operation of the system, the eccentricities of the two cycloid engagements (ring gear-intermediary wheel and intermediary-wheel-sprocket) should be equal (unless a flexibility is introduced into the system).

## Claims

1. Method of assisted differential transmission of rotational movement for electric bicycle comprising the following stages:
- an angular speed ω1 is applied by action of a first motor (M1) to a first inlet of a differential system (D);
- an angular speed ω2 is applied by an inlet body (I) transmitting at least the action of a rider (C) on a crankset (CK) to a second inlet of the differential system (D);
- The angular speeds ω1 and ω2 are combined in the differential system (D) comprising a ring gear (D1) having an inner surface and an element (D3) cooperating with this inner surface, the periphery of said element (D3) containing, at all times, the geometric center of the ring gear (D1), and transmitted to an outlet of the differential system (D) with an angular speed ω3;
- The speed ω3 is transmitted to an outlet body (O);
a second motor (M2) regulating assistance to the rider (C) being connected either to the second inlet in combination with the action of the rider through the inlet body, or to the outlet (O),
said method being **characterized in that** the axis of the outlet body (O), the main axis of the differential system (D), the axis of the first motor (M1) and the axis of the second motor (M2) are coincident and/or concentric with the axis of the inlet body (I).

2. Method according to claim 1, wherein the differential system is a cycloidal transmission system.

3. Method according to claim 2 wherein the ring gear has a toothed inner surface and the element cooperating with this inner surface is a toothed wheel mobile according to cycloidal motion, the toothing of the ring gear having a number of teeth Zc greater than the number of teeth Zr of the toothed wheel.

4. Method according to any of claims 2 to 3, according to which the cycloidal transmission comprises at least two toothed wheels.

5. Method according to any of the claims 2 to 4, according to which the first motor applies the angular speed ω1 to an eccentric excitation which is the first inlet, the second motor and the inlet body impart the angular speed ω2 to the ring gear which is the second inlet, the outlet being an eccentric carrier or a sprocket which transmits the angular speed ω3.

6. Method according to any of the claims 2 to 4, according to which the first motor applies the angular speed ω1 to an eccentric excitation which is the first inlet, the second motor and the inlet body impart the angular speed ω2 to an eccentric reducer or to the sprocket which is then the second inlet, the outlet being the ring gear which transmits the angular speed ω3.

7. Method according to claim 1 , according to which the differential system is a harmonic transmission system, whose ring gear has a toothed inner surface and the element cooperating with this inner surface is a toothed deformable wheel surrounding a wave generator, the number of teeth of the ring gear Zc being greater than the number of teeth of the deformable wheel Zr.

8. Powertrain for electric bicycle comprising:
- a differential system (D) comprising a ring gear (D1) having an inner surface and an element (D3) cooperating with this inner surface, the periphery of said element (D3) defining a surface containing the geometric center of the ring gear (D1),
- a first motor (M1) arranged to impart an angular speed to a first inlet of the differential system (D),
- an inlet body (I) arranged to impart an angular speed to a second inlet of the differential system (D),
- an outlet of the differential system (D) arranged to impart a speed to an outlet body (O), and
- a second motor (M2) regulating assistance to the rider (C) connected either to the second inlet in combination with the inlet body (I), or to the outlet,
said powertrain being **characterized in that** the axis of the outlet body (O), the main axis of the differential system (D), the axis of the first motor (M1) and the axis of the second motor (M2) are coincident and/or concentric with the axis of the inlet body (I).

9. The method according to any of claims 1 to 7 or the powertrain according to claim 8 with a crankset, wherein the inlet body is associated, directly or indirectly, to the axis of the crankset.

10. Powertrain according to any of the claims 8 to 9, wherein the inlet body is coupled via transmission means to the axis of the crankset.

11. Method according to any of claims 1 to 7 or powertrain according to any of the claims 8 to 10, wherein the inner surface of the ring gear presents an inner toothing, and the element cooperating with this inner surface is arranged to engage in this toothing.

12. Powertrain according to any of the claims 8 to when not depending on claims 2-3, wherein the differential system is a cycloidal transmission system wherein the inner surface of the ring gear presents an inner toothing and the element engages with the inner toothing of the ring gear is a toothed wheel, the toothing of the cycloidal ring gear having a number of teeth Zc greater than the number of teeth of the toothed wheel Zr.

13. Powertrain according to claim 12, wherein the toothed wheel also presents an inner surface equally toothed arranged to engage with a sprocket rotatably articulated around an axis coincident with the axis of the ring gear.

14. Powertrain according to any of the claims 8 to 10, wherein the differential system is a harmonic transmission system, wherein the inner surface of the ring gear presents an inner toothing and the element engaging with the toothing inner of the ring gear is a toothed deformable wheel surrounding a wave generator, the number of teeth of the ring gear Zc being greater to the number of teeth of the deformable wheel Zr.

15. Electric bicycle comprising the powertrain according to any of the claims 8 to 14, in which the axis of the ring gear is coincident and/or concentric with the axis of a wheel of the bicycle.

## Patentansprüche

1. Verfahren zur unterstützten Differentialübertragung einer Drehbewegung für ein Elektrofahrrad, das folgende Schritte umfasst:
- über den Antrieb eines ersten Motors (M1) wird eine Winkelgeschwindigkeit ω1 auf einen ersten Eingang eines Differentialsystems (D) ausgeübt;
- eine Winkelgeschwindigkeit ω2 wird durch einen Eingangskörper (I) erzeugt, der zumindest die Kraft eines Fahrers (C) auf eine Kettenradgarnitur (CK) auf einen zweiten Eingang des Differentialsystems (D) überträgt;
- die Winkelgeschwindigkeiten ω1 und ω2 werden in dem Differentialgetriebe (D) kombiniert, das aus einem Zahnkranz (D1) mit einer Innenfläche und einem mit dieser Innenfläche zusammenwirkenden Element (D3) besteht, wobei der Umfang des Elements (D3) zu jedem Zeitpunkt den geometrischen Mittelpunkt des Zahnkranzes (D1) enthält, der mit einer Winkelgeschwindigkeit ω3 an einen Ausgang des Differentialgetriebes (D) übertragen wird;
- die Geschwindigkeit ω3 wird auf einen Ausgangskörper (O) übertragen;
ein zweiter Motor (M2), der die Unterstützung des Fahrers (C) regelt, ist entweder mit dem zweiten Eingang in Verbindung mit der Betätigung durch den Fahrer über den Eingangskörper oder mit dem Ausgang (O) verbunden,
wobei das Verfahren **dadurch gekennzeichnet ist, dass** die Achse des Ausgangskörpers (O), die Hauptachse des Differentialsystems (D), die Achse des ersten Motors (M1) und die Achse des zweiten Motors (M2) mit der Achse des Eingangskörpers (I) deckungsgleich und/oder konzentrisch zu dieser sind.

2. Verfahren nach Anspruch 1, wobei das Differentialgetriebe ein Zykloidgetriebe ist.

3. Verfahren nach Anspruch 2, wobei der Zahnkranz eine verzahnte Innenfläche aufweist und das mit dieser Innenfläche zusammenwirkende Element ein Zahnrad ist, das nach einer Zykloidbewegung beweglich ist, wobei die Zähnezahl *Zc* der Verzahnung des Zahnkranzes größer ist als die Zähnezahl *Zr* des Zahnrads.

4. Verfahren nach einem der Ansprüche 2 bis 3, wobei das Zykloidgetriebe mindestens zwei Zahnräder umfasst.

5. Verfahren nach einem der Ansprüche 2 bis 4, bei dem der erste Motor die Winkelgeschwindigkeit ω1 auf eine exzentrische Erregung überträgt, die den ersten Eingang bildet, der zweite Motor und der Eingangskörper dem Zahnkranz, der den zweiten Eingang bildet, die Winkelgeschwindigkeit ω2 übermitteln, und der Ausgang ein exzentrischer Träger oder ein Kettenrad ist, das die Winkelgeschwindigkeit ω3 überträgt.

6. Verfahren nach einem der Ansprüche 2 bis 4, bei dem der erste Motor die Winkelgeschwindigkeit ω1 auf eine exzentrische Erregung überträgt, die den ersten Eingang bildet, der zweite Motor und der Eingangskörper die Winkelgeschwindigkeit ω2 auf ein exzentrisches Untersetzungsgetriebe oder auf das Kettenrad übertragen, das dann den zweiten Eingang bildet, wobei der Ausgang den Zahnkranz bildet, der die Winkelgeschwindigkeit ω3 überträgt.

7. Verfahren nach Anspruch 1, bei dem das Differentialgetriebe ein harmonisches Getriebe ist, dessen Zahnkranz eine verzahnte Innenfläche aufweist und das mit dieser Innenfläche zusammenwirkende Element ein verzahntes, verformbares Rad ist, das von einem Wellengenerator umgeben, wobei die Zähnezahl des Zahnkranzes *Zc* größer ist als die Zähnezahl des verformbaren Rades *Zr*.

8. Antriebsstrang für ein Elektrofahrrad, der Folgendes umfasst:
- ein Differentialsystem (D), das ein Zahnrad (D1) mit einer Innenfläche und ein mit dieser Innenfläche zusammenwirkendes Element (D3) umfasst, wobei der Umfang des Elements (D3) eine Fläche definiert, die den geometrischen Mittelpunkt des Zahnrads (D1) enthält;
- einen ersten Motor (M1), der so angeordnet ist, dass er eine Winkelgeschwindigkeit auf einen ersten Eingang des Differenzialsystems (D) überträgt,
- einen Eingangskörper (I), der so angeordnet ist, dass er eine Winkelgeschwindigkeit auf einen zweiten Eingang des Differenzialsystems (D) überträgt,
- einen Ausgang des Differenzialsystems (D), der so angeordnet ist, dass er eine Geschwindigkeit auf einen Ausgangskörper (O) überträgt, und
- einen zweiten Motor (M2), der die Unterstützung für den Fahrer (C) regelt und entweder mit dem zweiten Eingang in Verbindung mit dem Eingangskörper (I) oder mit dem Ausgang verbunden ist;
wobei der Antriebsstrang **dadurch gekennzeichnet ist, dass** die Achse des Ausgangskörpers (O), die Hauptachse des Differentialsystems (D), die Achse des ersten Motors (M1) und die Achse des zweiten Motors (M2) mit der Achse des Eingangskörpers (I) deckungsgleich und/oder konzentrisch zu dieser sind.

9. Verfahren nach einem der Ansprüche 1 bis 7 oder Antriebsstrang nach Anspruch 8 mit einer Kettenradgarnitur, wobei der Eingangskörper direkt oder indirekt mit der Achse der Kettenradgarnitur verbunden ist.

10. Antriebsstrang nach einem der Ansprüche 8 bis 9, wobei der Eingangskörper über Übertragungsmittel mit der Achse der Kettenradgarnitur gekoppelt ist.

11. Verfahren nach einem der Ansprüche 1 bis 7 oder Antriebsstrang nach einem der Ansprüche 8 bis 10, wobei die Innenfläche des Zahnkranzes eine Innenverzahnung aufweist und das mit dieser Innenfläche zusammenwirkende Element so angeordnet ist, dass es in diese Verzahnung eingreift.

12. Antriebsstrang nach einem der Ansprüche 8 bis 11, sofern er nicht von den Ansprüchen 2 bis 3 abhängt, wobei das Differentialsystem ein Zykloidgetriebe ist, bei dem die Innenfläche des Zahnkranzes eine Innenverzahnung aufweist und das Element, das in die Innenverzahnung des Zahnkranzes eingreift, ein Zahnrad ist, wobei die Zähnezahl *Zc* der Verzahnung des Zykloid-Zahnkranzes größer ist als die Zähnezahl des Zahnrads *Zr*.

13. Antriebsstrang nach Anspruch 12, wobei das Zahnrad zudem eine ebenfalls verzahnte Innenfläche aufweist, die so angeordnet ist, dass sie in ein Kettenrad eingreift, das drehbar um eine Achse gelagert ist, die mit der Achse des Zahnkranzes deckungsgleich ist.

14. Antriebsstrang nach einem der Ansprüche 8 bis 10, wobei das Differentialsystem ein harmonisches Getriebesystem ist, wobei die Innenfläche des Zahnkranzes eine Innenverzahnung aufweist und das in die Innenverzahnung des Zahnkranzes eingreifende Element ein verzahntes, verformbares Rad ist, das von einem Wellengenerator umgeben ist, wobei die Zähnezahl des Zahnkranzes *Zc* größer ist als die Zähnezahl des verformbaren Rads *Zr.*

15. Elektrofahrrad mit dem Antriebsstrang nach einem der Ansprüche 8 bis 14, wobei die Achse des Zahnkranzes mit der Achse eines Rades des Fahrrads deckungsgleich und/oder konzentrisch zu dieser ist.

## Revendications

1. Méthode de transmission différentielle assistée d'un mouvement de rotation pour vélo électrique comprenant les étapes suivantes :
- une vitesse angulaire ω1 est appliquée par action d'un premier moteur (M1) à une première entrée d'un système différentiel (D) ;
- une vitesse angulaire ω2 est appliquée par un corps d'entrée (I) transmettant au moins l'action d'un cycliste (C) sur un pédalier (CK) à une deuxième entrée du système différentiel (D) ;
- les vitesses angulaires ω1 et ω2 sont combinées dans le système différentiel (D) comprenant une couronne (D1) ayant une surface intérieure et un élément (D3) coopérant avec cette surface intérieure, le pourtour dudit élément (D3) contenant, à chaque instant, le centre géométrique de la couronne (D1), et transmises à une sortie du système différentiel (D) avec une vitesse angulaire ω3 ;
- la vitesse ω3 est transmise à un corps de sortie (O); un deuxième moteur (M2) de régulation de l'assistance au cycliste (C) étant connecté soit à la deuxième entrée en combinaison avec l'action du cycliste au travers du corps d'entrée, soit à la sortie (O),
ladite méthode étant **caractérisée en ce que** l'axe du corps de sortie (O), l'axe principal du système différentiel (D), l'axe du premier moteur (M1) et l'axe du deuxième moteur (M2) sont confondus et/ou concentriques avec l'axe du corps d'entrée (I).

2. Méthode selon la revendication 1, dans laquelle le système différentiel est un système de transmission cycloïdale.

3. Méthode selon la revendication 2, dans laquelle la couronne a une surface intérieure dentée et l'élément coopérant avec cette surface intérieure est une roue dentée mobile selon un mouvement cycloïdal, la denture de la couronne ayant un nombre de dents ***Zc*** supérieur au nombre de dents Zr de la roue dentée.

4. Méthode selon l'une des revendications 2 à 3, selon laquelle la transmission cycloïdale comprend au moins deux roues dentées.

5. Méthode selon l'une des revendications 2 à 4, selon laquelle le premier moteur applique la vitesse angulaire ω1 à une excentrique d'excitation qui est la première entrée, le deuxième moteur et le corps d'entrée impartissent la vitesse angulaire ω2 à la couronne qui est la deuxième entrée, la sortie étant un porte-excentrique ou un pignon qui transmet la vitesse angulaire ω3.

6. Méthode selon l'une des revendications 2 à 4, selon laquelle le premier moteur applique la vitesse angulaire ω1 à une excentrique d'excitation qui est la première entrée, le deuxième moteur et le corps d'entrée impartissent la vitesse angulaire ω2 à un réducteur excentrique ou au pignon qui est alors la deuxième entrée, la sortie étant la couronne qui transmet la vitesse angulaire ω3.

7. Méthode selon la revendication 1, selon laquelle le système différentiel est un système de transmission harmonique, dont la couronne a une surface intérieure dentée et l'élément coopérant avec cette surface intérieure est une roue déformable dentée entourant un générateur d'ondes, le nombre de dents de la couronne Zc étant supérieur au nombre de dents de la roue déformable Zr.

8. Groupe motopropulseur pour vélo électrique comprenant :
- un système différentiel (D) comprenant une couronne (D1) ayant une surface intérieure et un élément (D3) coopérant avec cette surface intérieure, le pourtour dudit élément (D3) définissant une surface contenant le centre géométrique de la couronne (D1),
- un premier moteur (M1) agencé pour impartir une vitesse angulaire à une première entrée du système différentiel (D),
- un corps d'entrée (I) agencé pour impartir une vitesse angulaire à une deuxième entrée du système différentiel (D),
- une sortie du système différentiel (D) agencée pour impartir une vitesse à un corps de sortie (O), et
- un deuxième moteur (M2) de régulation de l'assistance au cycliste (C) connecté soit à la deuxième entrée en combinaison avec le corps d'entrée (I), soit à la sortie,
ledit groupe motopropulseur étant **caractérisé en ce que** l'axe du corps de sortie (O), l'axe principal du système différentiel (D), l'axe du premier moteur (M1) et l'axe du deuxième moteur (M2) sont confondus et/ou concentriques avec l'axe du corps d'entrée (I).

9. Méthode selon l'une des revendications 1 à 7 ou groupe motopropulseur selon la revendication 8 avec un pédalier, le corps d'entrée étant associé, directement ou indirectement, à l'axe du pédalier.

10. Groupe motopropulseur selon l'une des revendications 8 à 9, dans lequel le corps d'entrée est couplé via des moyens de transmission à l'axe du pédalier.

11. Méthode selon l'une des revendications 1 à 7 ou groupe motopropulseur selon l'une des revendications 8 à 10, la surface intérieure de la couronne présentant une denture intérieure et l'élément coopérant avec cette surface intérieure étant agencé pour s'engrener dans cette denture.

12. Groupe motopropulseur selon l'une des revendications 8 à 11, lorsqu'il ne dépend pas des revendications 2 et 3, dans lequel le système différentiel est un système de transmission cycloïdale, dans lequel la surface intérieure de la couronne présente une denture intérieure et l'élément s'engrenant avec la denture intérieure de la couronne est une roue dentée, la denture de la couronne cycloïdale ayant un nombre de dents ***Zc*** supérieur au nombre de dents de la roue dentée Zr.

13. Groupe motopropulseur selon la revendication 12, dans lequel la roue dentée présente en outre une surface interne également dentée agencée pour s'engrener avec un pignon articulé en rotation autour d'un axe confondu avec l'axe de la couronne.

14. Groupe motopropulseur selon l'une des revendications 8 à 10, dans lequel le système différentiel est un système de transmission harmonique, dans lequel la surface intérieure de la couronne présente une denture intérieure et l'élément s'engrenant avec la denture intérieure de la couronne est une roue déformable dentée entourant un générateur d'ondes, le nombre de dents de la couronne Zc étant supérieur au nombre de dents de la roue déformable Zr.

15. Vélo électrique comprenant le groupe motopropulseur selon l'une des revendications 8 à 14, dans lequel l'axe de la couronne est confondu et/ou concentrique avec l'axe d'une roue du vélo.
